## Europäisches Patentamt
## European Patent Office
## Office européen des brevets

(19)

(11) Publication number: **0 009 981**

**B1**

(12) # EUROPEAN PATENT SPECIFICATION

(45) Date of publication of patent specification: **12.05.82**

(51) Int. Cl.³: **F 16 F 15/16**

(21) Application number: **79302119.7**

(22) Date of filing: **05.10.79**

(54) **Improved torsional vibration damper.**

(30) Priority: **11.10.78 GB 4014678**

(43) Date of publication of application:
**16.04.80 Bulletin 80/8**

(45) Publication of the grant of the patent:
**12.05.82 Bulletin 82/19**

(84) Designated Contracting States:
**CH DE FR GB IT NL SE**

(56) References cited:
**DE - C - 974 310**
**FR - A - 2 331 719**
**FR - A - 2 339 104**
**FR - A - 2 339 106**
**GB - A - 145 713**
**GB - A - 493 409**
**GB - A - 650 746**
**GB - A - 715 285**
**GB - A - 802 626**
**GB - A - 1 037 433**
**GB - A - 1 307 607**

(73) Proprietor: **HOLSET ENGINEERING COMPANY LIMITED**
**P.O. Box A9**
**Turnbridge Huddersfield, HD1 6RD (GB)**

(72) Inventor: **Vollett, Eric Malcolm**
**9 St. Mary's Crescent**
**Netherthong, Huddersfield (GB)**

(74) Representative: **Huntingford, David Ian et al,**
**W.P. THOMPSON & CO. Coopers Building Church Street**
**Liverpool L1 3AB (GB)**

Courier Press, Leamington Spa, England.

## Improved torsional vibration damper

The present invention relates to torsional vibration dampers used for damping the torsional vibrations of internal combustion engine crankshafts and other mass elastic shaft systems.

Various types of torsional vibration damper are in common use, the most effective being those known as tuned dampers. Tuned dampers usually comprise an inertia mass resiliently connected to a hub member by metallic or elastomeric tuning spring means, the hub member being adapted for rigid connection to the internal combustion engine crankshaft. The torsional vibration energy imparted to the damper inertia mass by the engine crankshaft during operation is converted into heat energy by damping means in the damper, thereby reducing the vibration amplitudes in the shaft system.

Various means have been employed for converting the vibration energy imparted to the damper inertia mass into heat energy. Where metallic springs have been used to couple the hub member, one common method of achieving the energy conversion has been to utilise the relative movement between the inertia mass and the hub to shear a thin film of viscous fluid, located between the inertia mass and a housing member rigidly attached to the hub member and surrounding the inertia mass in a close shear spaced relationship. Where elastomeric spring means have been used, the damping effect of the internal hysteresis of the elastomeric material has been used to effect the energy conversion. Alternatively, the energy conversion has been achieved by use of both hysteresis damping and viscous fluid shear damping in combination.

Various disadvantages are associated with the use of both metallic and elastomeric springs for coupling the inertia mass to the hub member of tuned vibration dampers. Where metallic spring means are used, they must be designed to operate at high stress levels and are subject to fatigue failure and, where the ends of the springs are freely located in slots or grooves at their points of attachment, to fretting which results in wear, thereby causing contamination of the damping fluid and eventual failure of the damper. Also, frictional effects contribute to the damping effect of the damper but to an incalculable and varying degree, thereby resulting in an unpredictable damper performance. Elastomeric springs have a low operating temperature limit which limits their damping capacity, optimum damping being difficult or often impossible to achieve. Where the damping is achieved by the combination of hysteresis damping in the elastomeric spring and viscous fluid shear damping, it is possible for reactions to occur between the materials causing degradation of either the viscous damping fluid, the elastomeric material or both components.

A further disadvantage resulting from the use of metallic or elastomeric tuning springs is the difficulty of adjusting them for optimum tuning without costly replacement or modification. This disadvantage is most severe when the tuned damper is large or is required for a single engine' or for small quantity application.

It is also known to use gas springs for effecting damping, such gas springs being arranged to be subjected to periodic compression by way of liquid pistons. In a known arrangement using gas springs (FR—A—2339106), a hub, which rotates with the shaft which is to be damped, carries a plurality of radially outwardly projecting teeth which extend with clearance into respective circumferential gaps between adjacent radially inwardly extending teeth on an annular inertia member. The clearances between the two sets of teeth communicate via radial bores in the hub with two closed, annular chambers disposed within the hub, one chamber communicating with the spaces defined by the leading edges of the hub teeth and the other chamber communicating with the spaces defined by the trailing edges of the hub teeth. The spaces between the teeth, the whole of said radial bores and a portion of each annular chamber contain a liquid, such as oil, whereby, when the assembly is rotated, two annular volumes of air, or other gas, are formed at radially inner portions of said two chambers, these gas volumes being alternately subjected to compression and expansion as a result of the relative angular displacement of the hub and inertia members, and hence of the two sets of teeth carried thereby.

There are, however, problems associated with the known gas spring arrangement which can limit its practical performance. One such problem with the known arrangement is that the use of two relatively large annular gas volumes commonly connected to the tooth spaces results in a very low spring rate for the gas springs since the change in volume of the spaces between the teeth is very small compared with the total volume of the gas subjected to compression.

It is an objective of the present invention to provide a torsional vibration damper of the type using gas springs but which overcomes the latter problem associated with the known arrangement.

In accordance with the present invention, the hub member carries a closed annular chamber within which the annular inertia chamber is totally enclosed and also carries a plurality of teeth which project radially inwardly into respective circumferential gaps between adjacent, radially outwardly projecting teeth on the inertia member, the circumferential spaces on the two sides of each hub tooth communicating directly with respective radially inwardly extending bores in the hub member which contain respective volumes of gas forming the gas springs. Thus, there is a plurality of discrete gas springs, preferably two for each hub member tooth.

The use of a plurality of smaller, discrete gas volumes in the present construction, rather than common annular gas volumes as in the known arrangement results in higher spring rates and more effective and tunable damping.

The invention is described further hereinafter, by way of example, with reference to the accompanying drawings, in which:—

Fig. 1 is a front view, with its front cover plate partially cut away, of one embodiment of a torsional vibration damper in accordance with the present invention;

Fig. 2 is a sectional view corresponding substantially to the cut-away portion in Fig. 1;

Fig. 3 is a sectional side view, the upper half of which corresponds to a section on the line AA of Fig. 2 and the lower half of which corresponds to a section on the line BB of Fig. 2;

Fig. 4 is a sectional view of part of the damper corresponding to a section on the line CC of Fig. 1; and

Fig. 5 is a sectional view of part of the damper corresponding to a section on the line DD of Fig. 1.

The illustrated damper has a hub member 10 comprising a metal plate 12 formed with a pair of coaxial cylindrical flanges 14, 16 extending normally to the plate 12 and defining an open channel therebetween which is closed by an annular plate 18 to define an annular chamber 20 of generally rectangular cross-section. The plate 18 is fitted to the flanges 14, 16 in a fluid tight manner by means of a plurality of screws 22. Disposed within the annular chamber 20 is an inertia ring 24 whose side surfaces 26, 28 and outer circumferential surface 30 are closely spaced from the adjacent side and circumferential surfaces of the annular chamber 20.

The plate part 12 of the hub member 10 has a central opening 34 enabling the damper to be mounted on a shaft (not shown) which, in use, is subject to torsional vibrations.

The inertia ring 24 is journalled for rotation relative to the hub member by means of a sleeve 32 of low-friction bearing material, such as p.t.f.e., disposed between the inner circumferential surface of the inertia ring and the hub flange 14. Lateral centralisation of the inertia ring within the chamber 20 is achieved by a plurality of disc-like pads 36 of low-friction material disposed in respective depressions at angularly spaced positions around the side surfaces 26, 28. The pads 36 engage in corresponding depressions 40 in the chamber side surfaces, which are preferably of circular section, the dimensions of the latter depressions 40 being somewhat greater than the associated pads 36 to enable the inertia ring to be capable of a predetermined angular displacement relative to the hub member. The limits of such displacement are determined by engagement of the pads 36 with the side of the oversized depressions 40.

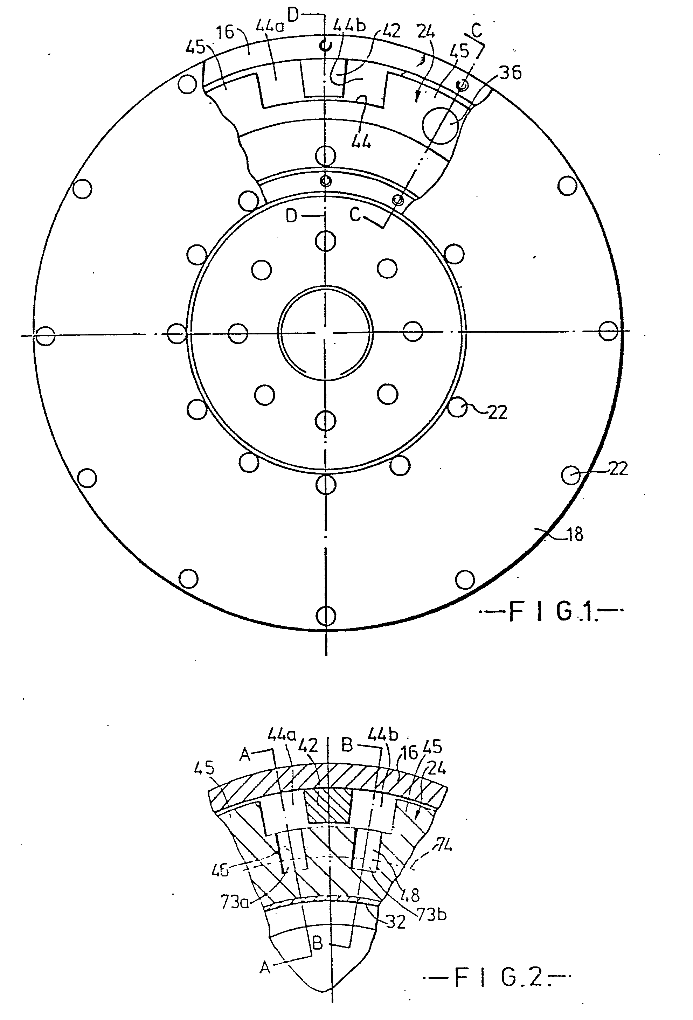

As best seen in the cut-away part of Fig. 1 and in Fig. 2, the inner periphery of the flange 16 of the hub member carries a plurality of radially inwardly extending vanes or teeth 42 which project into respective slots 44 between adjacent radially outwardly extending teeth 45 on the inertia ring 24 and extend from plate 12 to plate 18. Although only one such pair of vanes and slots is visible in the views provided, a plurality of such vane/slot pairs are uniformly disposed around the hub and inertia ring. As apparent from the drawings, the circumferential length of the slots 44 is considerably greater than the circumferential thickness of the vanes 42. However, the radially inner surface of the vanes is closely spaced from the base of the slots 44. The vanes 42 divide the slots 44 into two chambers, the volume of the one chamber varying inversely to that of the other chamber when the vanes 42 are displaced circumferentially in the slots 44.

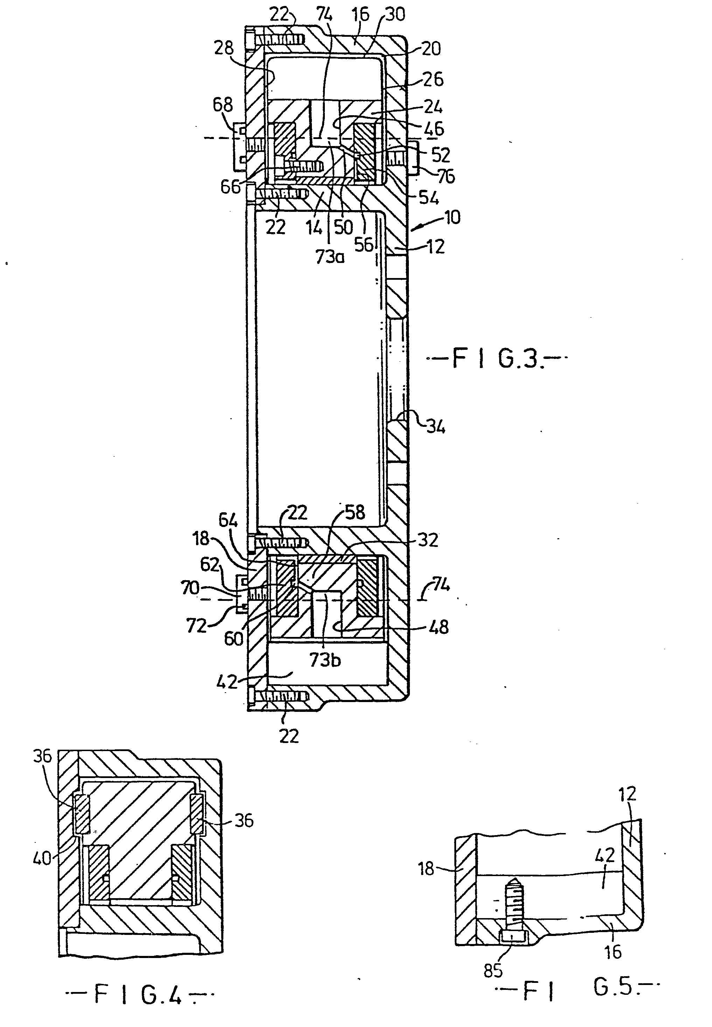

At circumferentially spaced positions in the base of the said slot 44 and disposed symmetrically on either side of the associated vane, there are formed radially directed, substantially blind bores 46, 48 of circular section. The bores 46, 48 within each slot 44 are positioned alternately with respect to each other around the circumference of the inertia ring. As illustrated in the top half of Fig. 3, the radially inner end of each blind bore 46 is linked via a narrow passage 50 to an annular groove 52 formed in a first side plate 54 mounted on one side of the inertia ring. The annular groove 52 is vented to the radially inner part of the annular chamber 20, which in use acts as a gas reservoir, by means of a constriction 56 for a purpose explained further hereinafter. Like-wise, each blind bore 48 is linked via a narrow passage 58 to an annular groove 60 formed in a second side plate 62 mounted on the other side of the inertia ring. The annular groove 60 is similarly vented to the gas reservoir formed by the radially inner part of the annular chamber 20 by a construction 64. The side plates 54, 62 can be fixed to the inertia ring by any suitable means, such as by screws 66.

The cover plate 18 is provided with a pair of screw-threaded plugs 68, 70, whose heads contain respective O-ring seals 72, for enabling a predetermined operating level of a viscous liquid (preferably silicone) in the chamber 20 to be established. This operating level is indicated by the broken line 74. Finally, the chamber 20 has a further screw-threaded plug 76 containing a one-way valve for enabling nitrogen or other inert gas, within the chamber 20 to be selectably pressurised for the purpose explained below.

The abovedescribed damper operates as follows:

In use, the damper is attached to a shaft, such as an internal combustion engine crankshaft, which, on top of its normal rotation, is subject to torsional vibration. Thus, the hub part of the damper is subjected to repeated angular accelerations in opposite directions in addition to its normal unidirectional rotation. As a result of the viscous coupling between the inertia ring and the hub due to the presence of the viscous liquid in the chamber 20, the inertia ring is carried round with the hub so that, were it not for the torsional vibration, the inertia ring could be considered to be stationary relative to the hub. Thus, the torsional vibration can be considered to cause oscillation of the hub relative to the inertia ring about a central position which is arranged to be that illustrated in Figs. 1 and 2.

When this oscillation results in rotation of the hub relative to the inertia ring in an anti-clockwise direction, as viewed in Figs. 1 and 2, it will be apparent that the liquid contained in the slot 44 to the left of the vane or tooth 42 and the liquid contained in the bore 46 will be forced down the bore 46 to a certain extent by the anti-clockwise moving vane 42, which decreases the volume of the chamber 44a to the left of vane 42. At the same time, the liquid in the bore 48 is drawn up the bore due to the increasing volume of the chamber 44b to the right of the vane 42. Thus, the pocket of gas 73a at the base of the bore 46 (that is, below the level of the broken line 74) is subjected to a compressive force during this movement and the pocket of gas 73b at the base of the bore 48 is subjected to a reduced pressure (suction). The same effect occurs at each vane/slot pair around the hub. The liquid to the left of the vane 42 in Fig. 2 thus acts as a liquid piston which compresses the pocket of gas 73a in the bore 46. The latter pocket of gas 73a therefore serves as a spring coupling between the hub and inertia ring so producing a spring tuning effect which may be used to optimise the performance of the damper.

It will be appreciated that when the hub subsequently moves in the clockwise direction relative to the inertia ring so that the vane 42 moves to the right in Fig. 2, the role of the bores 46 and 48 is reversed, whereby it is the pocket of gas 73b at the base of the bore 48 which is compressed.

The aforegoing explanation assumes that, as a result of the prevailing centrifugal forces, substantially complete separation of the gas and the liquid occurs in the bores 46 and 48. However, it may be that in fact this does not occur and that the bores 46, 48, and may be also the slot 44, contain a liquid/gas froth which is constantly being broken down by the centrifugal forces. In this even, the operation of the damper would involve the repeated compression of a froth rather than gas alone as described above.

The provision of the communicating passages 50, 52 and 58, 60 between the bases of the bores has the result that all of the bores which are "compression bores" at a given instant are connected together and all of the bores which are "suction bores" at that instant are connected together. The provision of the constricted vent passages 56, 64 between the communicating passages 52, 60 and the air reservoir ensures that a stabilized condition in which the bores contain equal volumes of gas, subjected to equal pressures, is achieved soon after start-up. The vent passages 56, 64 are sized such that on a compression stroke the gas flow through the passages is inadequate to permit gas pressure in the bores to fall to the gas pressure in the reservoir. Similarly on a suction stroke gas flow through the vent passages is inadequate to permit the gas pressure in the bores to rise to the gas pressure in the reservoir.

The correct liquid level in the chamber 20 is obtained using centrifugal force to drain the liquid through the level plugs 68 and 70 which are spaced 180° apart at equal radial levels. The effects of thermal expansion of the liquid are minimised by fixing the liquid level for there to be an enclosed air/liquid volume ratio of approximately 1:1, at the working temperature.

The spring rate obtained using this construction is a function of the internal gas pressure within the system and it may be necessary to pressurise the gas within the chamber 20 to obtain optimum tuning. This is achieved by way of the non-return valve 76.

The aforegoing construction provides a number of advantages as follows:

(a) The use of an optimised tuning characteristic results in a lower damping coefficient being required which enables the use of a viscous liquid in the chamber 20 having a lower viscosity than otherwise.

(b) The stiffness of the coupling between the hub and the inertia ring, provided by the compressed gas pockets which act as springs, is readily adjustable by varying the gas pressure within the damper.

(c) The performance of the damper is calculable and predictable.

(d) The size of the damper can be readily adapted to meet the requirements of any size of internal combustion engine.

It will be appreciated that the detailed construction of the hub and inertia ring could be different to that described whilst retaining the essential principle of operation.

Thus, for example, the chamber 20 need not be formed by the flange parts 14, 16 formed integrally with the plate part 12. As shown in Fig. 5, the vanes may be formed separately from other parts of the hub and attached thereto by bolts 80. Alternatively, the vanes could be integral with whatever member forms the outer wall 16 of the chamber.

The sleeve bearing 32 between the inner circumferential surface of the inertia ring 58 and the hub flange 14 may readily be replaced by segmental journal bearing pads located between the outer circumferential surface of the inertia ring and the inner circumferential surface of the hub flange 16. Alternatively journal bearing pads may be located between the radially inner circumference of the vane tips and the bottoms of the slots 44.

## Claims

1. A tuned viscous torsional vibration damper comprising an annular hub member (10) adapted for attachment to a shaft which, in use, is subject to torsional vibration, an annular inertia member (24) carried by the hub member and journalled for rotation relative to said hub member (10) with at least one surface being in close spaced, face to face relation with at least one opposing surface of said hub member, a viscous fluid contained between said opposing surfaces in shear relation, and gas springs disposed between the hub member and the inertia member to provide a torsionally resilient coupling between the hub and inertia members, the gas springs being formed by gas volumes communicating with circumferential spaces disposed between loosely intermeshing teeth carried by the hub and inertia members, respectively, characterised in that the hub member (10) carries a closed annular chamber (20) within which the annular inertia member (24) is totally enclosed and in that the hub (10) has a plurality of teeth (42) which project radially inwardly into said annular chamber (20) and into respective circumferential gaps between adjacent, radially outwardly projecting teeth on the inertia member, the circumferential spaces on the two sides of each hub tooth (42) communicating directly with respective angularly spaced, radially inwardly extending bores (46, 48) in the hub member which contain respective volumes of gas forming said gas springs.

2. A damper according to claim 1 in which the individual radial bores (46, 48) are arranged such that all gas springs subjected to compression at a given time are coupled together and all gas springs subjected to expansion at that time are coupled together, characterised in that the coupling of the gas springs is effected by way of passages (50, 52) whose cross-sectional area is small compared with the cross-sectional area of said radial bores (46, 48).

3. A damper according to claim 2, charac-·terised in that said connecting passages (50, 52) are vented to a location within the annular chamber 20).

4. A damper according to claim 1, 2 or 3, characterised by means disposed in the opposed radial side faces of the inertia and hub members (24, 10) which limit the relative angular displacement of the latter members (24, 10) to a predetermined value.

5. A damper according to claim 4, characterised in that said means limiting the relative angular displacement of the hub and inertia members comprises a plurality of projections (36) carried by one of said members (24, 10) and extending into respective recesses (40) in the other said members, the recesses (40) being laterally oversized in relation to the projections (36) so as to permit said predetermined angular displacement.

6. A damper according to claim 5, characterised in that the projections (36) are made of a low friction material.

7. A damper according to claim 5 or 6, characterised in that the projections (36) comprise disc-like pads and the oversized recesses (40) are of circular section.

## Revendications

1. Amortisseur dynamique de·vibrations de torsion de type visqueux, comprenant un moyeu annulaire (10) destiné à être fixé à un arbre qui, en cours d'utilisation, est soumis à une vibration de torsion, un organe annulaire d'inertie (24) porté par le moyeu et tourillonnant par rapport au moyeu (10) avec au moins une surface qui est proche d'au moins une surface en regard du moyeu et est placée en face de celle-ci, un fluide visqueux contenu entre les surfaces en regard afin qu'il subisse un cisaillement, des ressorts pneumatiques placés entre le moyeu et l'organe d'inertie et assurant l'accouplement élastique à la torsion du moyeu et de l'organe d'inertie, les ressorts pneumatiques étant formés par des volumes contenant du gaz et communiquant avec des espaces circonférentiels disposés entre des dents qui sont en prise avec du jeu et qui sont portées par le moyeu et l'organe d'inertie respectivement, caractérisé en ce que le moyeu (10) porte une chambre annulaire fermée (20) dans laquelle l'organe annulaire d'inertie (24) est totalement enfermé, et en ce que le moyeu (10) a plusieurs dents (42) qui dépassent radialement vers l'intérieur, dans la chambre annulaire (20) et dans des espaces circonférentiels correspondants formés entre des dents adjacentes dépassant radialement vers l'extérieur de l'organe d'inertie, les espaces circonférentiels des deux côtés de chaque dent (42) du moyeu communiquant directement avec des alèsages angulairement espacés (46, 48) dirigés radialement vers l'intérieur dans le moyeu et qui contiennent des volumes correspondants de gaz formant les ressorts pneumatiques.

2. Amortisseur selon la revendication 1 dans lequel les alésages radiaux individuels (46, 48) sont disposés de manière que tous les ressorts pneumatiques soumis à la compression à un moment donné soient couplés les uns aux autres et tous les ressorts pneumatiques soumis à une détente à ce moment soient couplés les uns aux autres, caractérisé en ce que le couplage des ressorts pneumatiques est assuré par des passages (50, 52) dont la section est faible par rapport à celle des alésages radiaux (46, 48).

3. Amortisseur selon la revendication 2, caractérisé en ce que les passages de connexion (50, 52) communiquent avec un emplacement de l'intérieur de la chambre annulaire (20).

4. Amortisseur selon l'une quelconque des revendications 1, 2 et 3, caractérisé en ce qu'il comprend un dispositif placé dans les faces latérales radiales en regard de l'organe d'inertie et du moyeu (24, 10) qui limitent de déplacement angulaire relatif de ces organes (24, 10) à une valeur prédéterminée.

5. Amortisseur selon la revendication 4, caractérisé en ce que le dispositif qui limite le déplacement angulaire relatif du moyeu et de l'organe d'inertie comprend plusieurs saillies (36) portées par l'un des organes (24, 10) et disposées dans les cavités correspondantes (40) et l'autre des organes, les cavités (40) étant surdimensionnées latéralement par rapport aux saillies (36) afin que ledit déplacement angulaire prédéterminé soit permis.

6. Amortisseur selon la revendication 5, caractérisé en ce que les saillies (36) sont formées d'une matière à faible coefficient de frottement.

7. Amortisseur selon l'une des revendications 5 et 6, caractérisé en ce que les saillies (36) sont des patins en forme de disques et les cavités surdimensionnées (40) ont une section circulaire.

**Patentansprüche**

1. Abgestimmter Viskositäts-Torsionsschwingungsdämpfer mit einem ringförmigen Nabenteil (10), das zur Befestigung an einer Welle ausgebildet ist, welche im Gebrauch einer Torsionsschwingung ausgesetzt ist, ferner mit einem ringförmigen Trägheitselement (24), das von dem Nabenteil getragen und relativ zu dem Nabenteil (10) zur Rotation gelagert ist, wobei wenigstens eine Oberfläche in eng beabstandeter Fläche-zu-Fläche-Beziehung mit wenigstens einer gegenüberliegenden Oberfläche des Nabenteils steht, ein viskoses Fluid zwischen den gegenüberstehenden Oberflächen in Scherbeziehung enthalten ist und Gasfedern zwischen dem Nabenteil und dem Trägheitselement angeordnet sind, um eine torsionsmäßig elastische Kopplung zwischen dem Nabenteil und dem Trägheitselement zu schaffen, und wobei ferner die Gasfedern durch Gasvolumina geformt sind, die mit Umfangsräumen in Verbindung stehen, welche zwischen lose ineinanderkämmenden Zähnen angeordnet sind, die von dem Nabenteil bzw. dem Trägheitselement getragen werden, dadurch gekennzeichnet, daß das Nabenteil (10) eine geschlossene Ringkammer (20) trägt, innerhalb welcher das ringförmige Trägheitselement (24) vollständig eingeschlossen ist, daß ferner die Nabe (10) eine Vielzahl von Zähnen (42) aufweist, welche radial einwärts in die Ringkammer (20) hineinragen und in jeweilige Umfangslücken zwischen benachbarten radial auswärts ragenden Zähnen des Trägheitselements, und daß die Umfangsräume auf den beiden Seiten jedes Nabenzahns (42) unmittelbar mit jeweiligen im Winkel beabstandeten, sich radial einwärts erstreckenden Bohrungen (46, 48) in dem Nabenteil in Verbindung stehen, welche jeweils Gasvolumina enthalten, die die Gasfedern bilden.

2. Dämpfer nach Anspruch 1, bei dem die individuellen Radialbohrungen (46, 48) derart angeordnet sind, daß alle zu einem bestimmten Zeitpunkt einer Kompression ausgesetzten Gasfedern zusammengekoppelt sind und alle zu diesem Zeitpunkt einer Expansion ausgesetzten Gasfedern miteinander gekoppelt sind, dadurch gekennzeichnet, daß die Kopplung der Gasfedern mittels Durchgängen (50, 52) herbeigeführt ist, deren Querschnittsfläche im Vergleich mit der Querschnittsfläche der Radialbohrungen (46, 48) klein ist.

3. Dämpfer nach Anspruch 2, dadurch gekennzeichnet, daß die Verbindungsdurchgänge (50, 52) zu einer Stelle innerhalb der Ringkammer (20) hin belüftet sind.

4. Dämpfer nach Anspruch 1, 2 oder 3, dadurch gekennzeichnet, daß in den gegenüberliegenden radialen Seitenflächen des Trägheitselements und des Nabenteils (24, 10) Mittel vorgesehn sind, welche die relative Winkelversetzung dieser Teile (24, 10) auf einen vorbestimmten Wert begrenzen.

5. Dämpfer nach Anspruch 4, dadurch gekennzeichnet, daß die die relative Winkelauslenkung des Nabenteils und des Trägheitselements begrenzenden Mittel eine Vielzahl von Vorsprüngen (36) umfassen, die von einem der Teile (24, 10) getragen sind und sich in jeweilige Ausnehmungen (40) in dem anderen Teil hineinerstrecken, und daß die Ausnehmungen (40) seitlich in Bezug zu den Vorsprüngen (36) mit Übermaß versehen sind, so daß die vorbestimmte Winkelversetzung ermöglicht wird.

6. Dämpfer nach Anspruch 5, dadurch gekennzeichnet, daß die Vorsprünge (36) aus einem Material geringer Reibung hergestellt sind.

7. Dämpfer nach Anspruch 5 oder 6, dadurch gekennzeichnet, daß die Vorsprünge (36) scheibenförmige Polster sind und die mit Übermaß versehenen Ausnehmungen (40) einen kreisförmigen Querschnitt aufweisen.

0 009 981

—F I G.1.—

—F I G.2.—

1

—F I G.3.—

—F I G.4.—

—F I G.5.—

2